# EUROPÄISCHE PATENTSCHRIFT

(11) **EP 0 490 032 B1**
(45) Veröffentlichungstag und Bekanntmachung des Hinweises auf die Patenterteilung: **22.06.1994**
(21) Anmeldenummer: 91116217.0
(22) Anmeldetag: 24.09.1991
(51) Int. Cl.: F16L 37/00, F16L 37/28, F16L 37/22

(54) **In Betankungsleitungen oder dergleichen einsetzbare Kupplung**
Coupling insertable in refuelling conduits or similar ones
Raccordement utilisable dans des conduits de ravitaillement ou similaires

(30) Priorität: 14.12.1990 DE 4040077
(43) Veröffentlichungstag der Anmeldung: 17.06.1992
(73) Patentinhaber: Carl Kurt Walther GmbH & Co. KG, D-42306 Wuppertal (DE)
(72) Erfinder:
(74) Vertreter: Rieder, Hans-Joachim, Dr.

(56) Entgegenhaltungen:
- DE-A- 3 624 135
- DE-B- 1 290 017
- US-A- 4 188 050

## Beschreibung

Die Erfindung bezieht sich auf eine in Betankungsleitungen oder dergleichen einsetzbare Kupplung mit den Strömungsweg des Mediums absperrenden Verschlußmitteln, welche selbsttätig in Abhängigkeit von einer Verlagerung der Zuleitung zur Ableitung in die Verschlußstellung gesteuert sind, wobei die Kupplung als Schnellverschluß-Kupplung gestaltet ist.

Eine als Schnellverschluß-Kupplung gestaltete Kupplung dieser Art ist durch die DE-A 36 24 135 bekannt. Sie ist unter Druck kuppelbar und arbeitet leckarm.

Weiter finden Kupplungen an Großanlagen, insbesondere Schiffsverladern als sogenannte Driftsicherungssysteme Verwendung. Trotz der dort sensor-registrierten Kennung arbeiten entsprechende Vorrichtungen, meist in Form von aufwendigen, recht lastigen Kugelhähnen, äußerst träge. Die dabei auch nicht zu verhindernden Leckverluste stellen ein ernstes Umweltproblem dar, obwohl gegenüber ebenfalls bekannten Not-Trennvorichtungen, den klassischen Sollbruch-Vorrichtungen, schon ein gewisser Fortschritt vorliegt.

Aufgabe der Erfindung ist es, eine gattungsgemäße Kupplung in herstellungstechnischer einfacher Weise so weiter zu bilden, daß sie gebrauchs- und funktionssicher in Betankungsleitungen verwendet werden kann.

Gelöst ist diese Aufgabe durch die im Anspruch 1 angegebene Erfindung.

Die Unteransprüche sind vorteilhafte Weiterbildungen des Erfindungsgegenstandes.

Infolge solcher Ausgestaltung sind eine schnell und leicht, ohne jeweiliges Ablegen adaptierbare Kupplung, eine einwandfreie Betankungsweise sowie eine sichere Notlagenbeherrschung erzielt. Die baulichen Mittel sind einfach und zweckgenutzt. Konkret wird diesbezüglich vorgeschlagen, daß die genannte Verlagerung sensor-registriert ist und daß die Kupplung mit einem sensor-bedingt druckmittelbeaufschlagten Auswerferstößel zum Trennen der beiden zuvor ebenfalls sensor-bedingt je für sich in Schließstellung gesteuerten Kupplungshälften versehen ist.

Eine solche Kupplung ist aus vom den Verladearm belastenden Gewicht her leichter als die erwähnten, recht lastigen Kugelhähne. Es treten keinerlei Leckverluste auf. Das Adaptieren, Öffnen und Schließen der Kupplungshälften, d. h. ihrer Verschlußventile, geschieht ebenso schlagartig, wie das als letztes stattfindende Herauskatapultieren der einen Kupplungshälfte, hier beispielsweise der schiffsseitigen. Schon die geringste Störkontur (Austreten aus dem Erstreckungswinkel heraus) initiiert die Trennung. Den verschärften Umweltbedingungen ist bestens Rechnung getragen, zumal die von Hause aus schon günstigen Voraussetzungen entsprechender Schnellverschlußkupplungen hier günstigst greifen. Unter dem Aspekt der erwähnten Weiterbildung erweist es sich dabei als vorteilhaft, daß der Auswerferstößel als zweiseitig druckmittelbeaufschlagbarer Ringkolben gestaltet ist. Dadurch bleibt das bewährte Zentralsystem solcher Schnellverschlußkupplungen erhalten; der Ringkolben liegt in dem rotationssymmetrischen Umfeld der Schnellverschlußkupplung unter Nutzung der hier bestens, d. h. verkippungsfrei gegebenen Angreifzone des Ringkolbens zur anderen Kupplungshälfte hin. Diesbezüglich erweist es sich sodann als vorteilhaft, daß der in der einen Kupplungshälfte sitzende Ringkolben sich etwa auf Höhe der Trennfuge der beiden Kupplungshälften liegenden Ringschulter der anderen Kupplungshälfte erstreckt und in ausgefahrener Endstellung mit dem freien Stirnende der einen Kupplungshälfte fluchtet. In Trennstellung gibt es so keine auch noch so geringe axiale Überlappung der beiden Kupplungshälften mehr. Sie fallen behinderungsfrei in die beabsichtigte Trennposition. Weiter wird vorgeschlagen, daß der Ringkolben in einem Ringschacht der einen Kupplungshälfte angeordnet ist. Diese, auch als Ringzylinder zu bezeichnende Ausnehmung läßt sich baulich bestens bewerkstelligen, indem einfach eine weitere Hülse auf den üblichen Schnellverschlußkupplungs-Körper aufgeschoben und gehaltert wird. Hierüber lassen sich auch die Bedarfsgrößen regeln, also größere oder kleinere Ringkolben zuordnen, so daß in bezug auf das gefahrene Medium stets die entsprechende individuelle Anpassung auch nachträglich noch möglich ist. Über diesen sogar eine eigene Bedeutung aufweisenden Gedanken hinaus wird sodann vorgeschlagen, daß die Verschlußteile der Kupplungshälften, eine ihnen zugeordnete Verriegelungshülse aufweisen und der Ringkolben selbst von einer gemeinsamen Druckmittelquelle gespeist ist. Hier kann ein hydraulisches Medium greifen oder aber auch Druckluft eingesetzt werden. Die Reihenfolge der Auslösungen der einzelnen Funktionen berücksichtigt voll die Sicherheitserfordernisse, indem sensor-bedingt zuerst das Betätigen der Verschlußteile, sprich Verschlußventile erfolgt und daran in sinngemäßer Folge die restlichen Funktionen anschließen. In diesem Zusammenhang besteht eine besonders geschickte, ebenfalls schon für sich bedeutende Lösung dadurch, daß die Verriegelungshülse gegen Verlagerung in Offenrichtung blockiert ist mittels der Stirnkante eines die Verschlußventile steuernden, beidseitig druckmittelbeaufschlagten Ringschiebers. Letzterer ist als Büchse oder Muffe gestaltet, in die der Nippel der schiffsseitigen Kupplungshälfte kuppelnd einfährt. Bei zurückgefahrenem Ringschieber brauchen so die Ventilfederkräfte und der Mediendruck nicht mehr durch den einfahrenden Nippel überwunden zu werden. Der Nippel schnappt gegen die nur geringe Federkraft der Verriegelungshülse ein. Das ist praktisch nur noch ein Hinhalten. In dieser mit nur geringen Kräften erzielten Verriegelungsstellung kann die Kuppeleinheit beliebig lange verharren. Endlich besteht noch ein vorteilhaftes Merkmal darin, daß die Verriegelungshülse mittels mehrerer gegen ihre Stirnkante wirkender Einzelkolben entgegen Federbelastung in ihre Öffnungsstellung verlagerbar ist. Die für sich ohne größeren Raumbedarf zuordbaren Einzelkolben liegen auch hier in einer Zone, die den zentralen Durchflußbereich für das zu verladende Medium freiläßt. Die Verteilung der Einzelkolben berücksichtigt die optimale Wirkung im Sinne der klassischen Dreipunktabstützung. Allerdings genügt es aber auch schon, zwei diametral einander gegenüberliegende Einzelkolben zu realisieren. Allerdings ist auch ein Ringkolben denkbar.

Der Gegenstand der Erfindung ist nachstehend anhand eines zeichnerisch veranschaulichten Ausführungsbeispieles näher erläutert. Es zeigt
- Fig. 1: die Schnellverschlußkupplung in Ausgangsposition, also entkuppelt und bei geschlossenen Verschlußventilen, beide Kupplungshälften in der Längsmittelebene partiell aufgebrochen,
- Fig. 2: die Schnellverschlußkupplung in Kupplungsposition, jedoch bei noch geschlossenen Verschlußventilen,
- Fig. 3: die sogenannte Betankungsposition (Ventile geöffnet), und zwar im Halbschnitt und in mehr detaillierter zeichnerischer Wiedergabe der erfindungsgemäßen Kupplung,
- Fig. 4: die Entkupplungsposition, in der die Ventile wiederum geschlossen sind und der Auswerferstößel seine max. Ausfahrstellung eingenommen hat, in welcher Stellung sich die schiffsseitige Kupplungshälfte frei trennen kann (vereinfachte zeichnerische Darstellung entsprechend der Fig. 1 und 2),

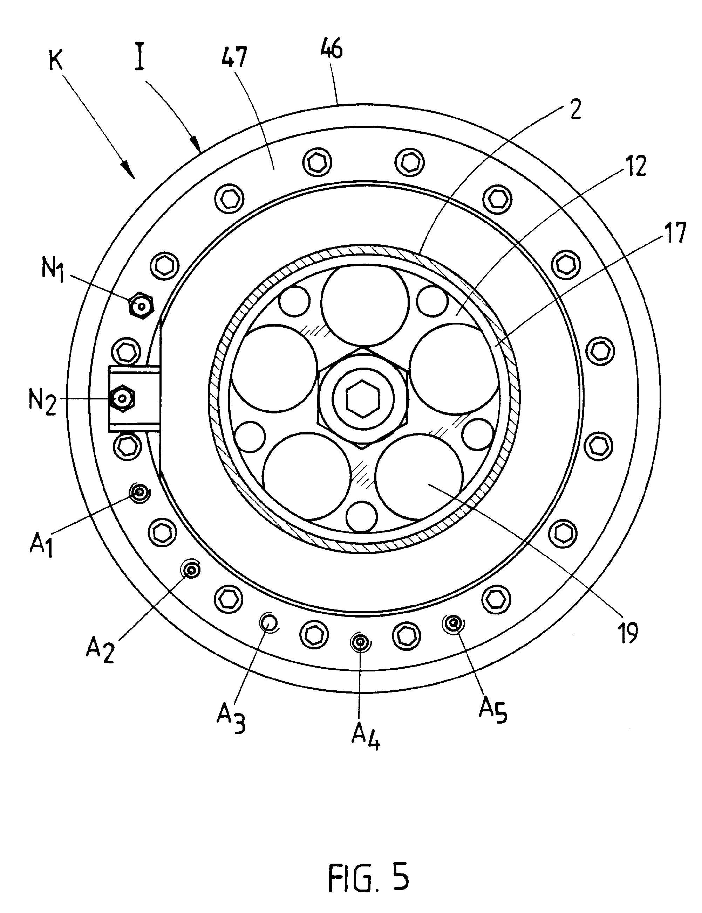

- Fig. 5: den Schnitt gemäß Linie V-V in Fig. 3, die genaue Lage der Anschlußpositionen für das Hilfsmedium wiedergebend und

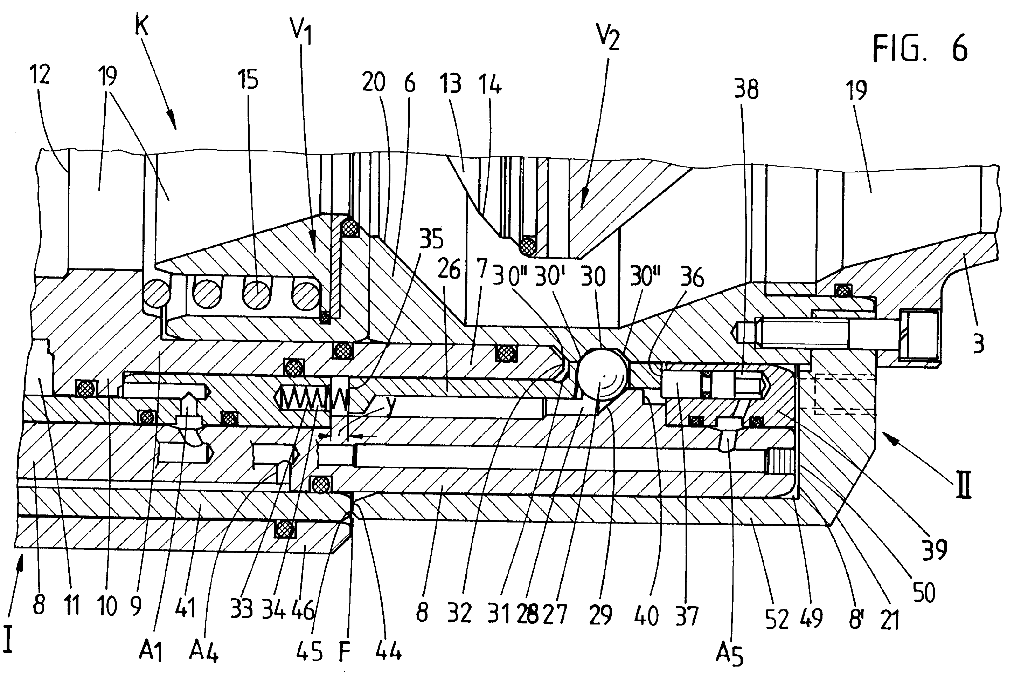

- Fig. 6: eine Herausvergrößerung der Sperrhülsenpartie.

Die erfindungsgemäß ausgebildete Kupplung ist als Schnellverschlußkupplung K realisiert. Ihre eine Kupplungshälfte I steht über eine Betankungsleitung L1 mit einem sogenannten Schiffslader in Verbindung.

Die zugehörige, mit II bezeichnete andere Kupplungshälfte steht mit der zu einem Schiff führenden Betankungsleitung L2 in Verbindung.

Abgangsseitig der beiden Kupplungshälften I, II befindet sich dazu je ein Anschlußstutzen 2 bzw. 3 mit zugehörigem Flansch 4 bzw. 5.

Je nach Richtung des Medienflusses bildet die eine Betankungsleitung die sogenannte Zuleitung und dementsprechend die andere die sogenannte Ableitung.

In Abhängigkeit von einer sensor-registrierten Verlagerung der Zuleitung zur Ableitung werden die der Schnellverschlußkupplung K einverleibten Verschlußmittel, hier ein Verschlußventil V1 in der einen Kupplungshälfte I und ein Verschlußventil V2 in der anderen Kupplungshälfte II schlagartig gesperrt. Die Sensor-Einrichtung bedarf keiner näheren Erörterung oder Darstellung.

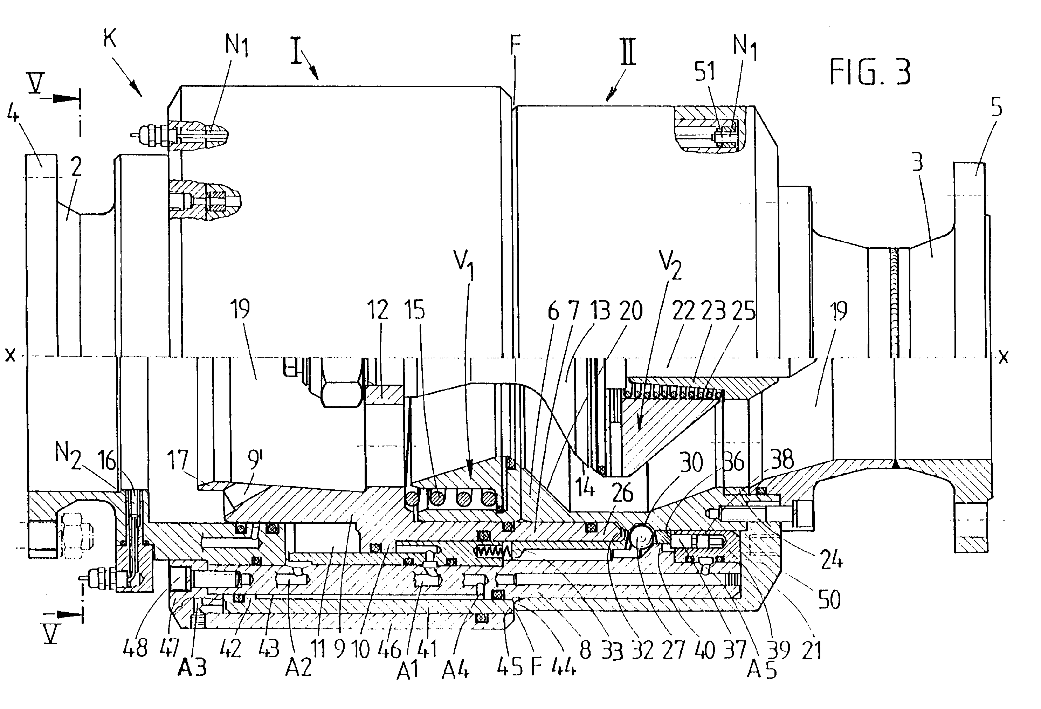

Die schiffsseitige Kupplungshälfte II besitzt einen zentral liegenden, von einer Ringwand gebildeteten Nippel 6. Dieser ist in dichtende, verriegelte Steckverbindung bringbar mit einer Muffe oder Büchse 7 der einen Kupplungshälfte I. Letztere (7) ist der nach rechts außen gewandte Bestandteil eines anschlagbegrenzt axial im Gehäuse 8 der einen Kupplungshälfte I verlagerbaren Ringschiebers 9. Dessen Mantelwand formt einen Kolben 10. Dieser ist beidseitig druckmittelbeaufschlagbar. Die eine, einen Zylinderraum 11 des Kolbens 10 speisende Anschlußstelle ist mit A1 bezeichnet (vergl. Fig. 3). Sie befindet sich auf der der anderen Kupplungshälfte II zugewandten Seite des Kolbens 10. Die andere, jenseits liegende, trägt das Bezugszeichen A2. Deren Zuleitungen führen über zwischengeschaltete, nicht näher dargestellte Steuerventile schließ- oder freigebbar, zu einer gemeinsamen Druckmittelquelle.

Der Ringschieber 9 ist Bestandteil des verladerseitigen Verschlußventils V1. Er trägt hierzu an einer reich durchbrochenen Querwand 12 einen zentral liegenden Ventilstößel 13. Letzterer formt an einem tellerartigen Kopf eine rückwärtige Ventilsitzfläche 14. Mit letzterer arbeitet die korrespondierende Ringfläche des Verschlußventils V1 zusammen. Eine schraubengangförmige Druckfeder 15 hält den Ventilkörper des Verschlußventils V1 in dichtschließender Anlage. Das abgewandte Ende der Druckfeder stützt sich an der erwähnten Querwand 12 lagezentriert ab. Auch das andere Ende der Druckfeder 15 erfährt eine Lagezentrierung zufolge ringschachtartiger Ausbildung des Ventilkörpers.

Die Verlagerungsbegrenzung des Ringschiebers 9 ist über gehäuseseitige Anschläge im Bereich des Zylinderraumes 11 verwirklicht, und zwar unter Beteiligung dortiger Ringschultern und der Stirnseiten des Kolbens 10.

Über die Anschlußstelle A1 wird der Ringschieber 9 in seiner Grundposition gehalten. Diese Endstellung ist über eine Kennung N2 im Bereich des auswärts gerichteten Endes des Ringschiebers 9 vermeidbar. Als Kennungselement dient ein im Fuß des dortigen Anschlußstutzens 2 sitzender Näherungsinitiator 16. Er ist radial ausgerichtet und wirkt mit einem rotationssymmetrischen, schirmartigen Fortsatz 17 zusammen, welche eine den Näherungsinitiator 16 lagernde Stufe überfährt. Um in diesem Bereich Medieneinschluß zu vermeiden, ist zwischen dem ringwandartigen Fortsatz 17 und dem von diesem überragten Stirnendbereich des Ringschiebers 9 ein Stichkanal 9′ angeordnet, welcher mit dem zentralen Durchlaßkanal 19 der Schnellverschlußkupplung K kommuniziert.

Was die Verschlußteile der anderen Kupplungshälfte II angeht, so bestehen diese ebenfalls aus einem abgefederten Ventilkörper, bezeichnet als Verschlußventil V2. Die zugehörige Ventilsitzfläche 20 des dortigen Gehäuses 21 bildet eine ringförmige Innenflanke im freien Ende des Nippels 6. Dieser Ventilkörper besitzt einen zentral angeordneten, in Richtung des Anschlußstutzens 3 weisenden Schaft 22. Letzterer führt sich in einem ortsfesten Stutzen 23, welcher von einer auch hier realisierten, reich durchbrochenen Querwand 24 ausgeht.

Das Verschlußventil V2 steht, wie angedeutet, ebenfalls in Schließrichtung unter Federbelastung. Die diesbezüglich schraubengangförmige Druckfeder trägt das Bezugszeichen 25. Sie stützt sich einerends an der nippelseitigen Breitfläche der Querwand 24 ab und anderenends in einer konzentrisch zum Schaft 22 liegenden Federkammer des Ventilkörpers des Verschlußventils V2.

Das eintauchfähige Ende des Nippels 6 besitzt einen Außendurchmesser, der dem lichten Durchmesser der Muffe bzw. Büchse 7 des Ringschiebers 9 entspricht, so daß der Nippel 6 mit seiner ringförmigen Stirnfläche die korrespondierende ringförmige Stirnfläche des Verschlußventils V1 entgegen der Kraft der Druckfeder 15 von der Ventilsitzfläche 14 abheben kann.

Der Schnellverschlußkupplung K ist eine Verriegelungshülse 26 einverleibt. Die Verriegelungshülse 26 ist axial anschlagbegrenzt verschiebbar. Als Verriegelungselemente dienen Verriegelungskugeln 27. Diese sind unverlierbar in konischen Radialbohrungen der zugleich eine Art Kugelkäfig bildenden Verriegelungshülse 26 aufgenommen. Der Bohrungskonus verjüngt sich nach innen hin. Die Verriegelungskugeln 27 befinden sich in der Entkupplungsstellung in einer Ausweichlage, d. h. sie treten in eine mit Steuerflächen versehene Ringnut 28 des Gehäuses 8 ein. In vorgesteuerter Lage der Verriegelungshülse 26 hebt eine Steuerschräge 29 der Ringnut 28 die Verriegelungskugeln 27 so weit an, daß sie sperrend in eine entsprechend liegende Ringnut 30 an der Mantelfläche des Nippels 6 einrücken.

Die Ringnut 30 besitzt nach außen konvergierende Ringflanken. Der Flankenneigungswinkel liegt 45° zur Längsmittelachse x-x der Schnellverschlußkupplung K. Die Steuerschräge 29 nimmt einen entsprechenden Verlauf. Ihre sperraktive Gegenflanke ist die mit 30′ bezeichnete der Ringnut 30. Die andere Flanke 30˝ der Ringnut 30 wirkt zusammen mit der dortigen Seite der konischen Radialbohrung für die Kugel 27 abstützend.

Die andere, dem Anschlußstutzen 2 näherliegende Seite der Radialbohrung formt in ihrem Rücken einen Anschlag 31. Hierüber ist die Verriegelungshülse 26 gegen Verlagerung in Öffnungsrichtung bei geöffneten Verschlußventilen V1, V2 blockiert.

Im Bereich des Anschlages 31 weist die Verriegelungshülse 26 eine größere Wandungsdicke auf, dies auch im Interesse der Bildung genügend langer Radialbohrungen. Die durch Ausdrehen der Verriegelungshülse 26 geschaffene, den Anschlag 31 formende Stufe bringt zugleich einen entsprechend breiten Raum für die in die Verriegelungshülse überlappend einfahrende Büchse 7 des Ringschiebers 9. Die dortige Stirnkante des Ringschiebers 9 respektive der Büchse 7 ist mit 32 bezeichnet und so in die Steuerung der Verschlußteile über den beidseitigen druckmittelbeaufschlagten Schieber 9 mit einbezogen.

Der Flanke 30′ ist eine die Sperrkugeln 27 aussteuernde Vorflanke 30‴ vorgelagert.

Die Verriegelungshülse 26 steht in Richtung ihrer aus Fig. 3 besonders deutlich hervorgehenden Grundstellung unter Federbelastung. Zur Anwendung kommen mehrere axial ausgerichtete Druckfedern 33. Letztere sitzen in je einer Sackbohrung 34 des Gehäuses 8. Es sind beispielsweise 3 solcher Druckfedern in eine Ringstufe des Gehäuses 8 eingelassen. Diese bringen eine ausgewogene Federbeaufschlagung gegen das ihr zugewandte, im Fußbereich entsprechend wandungsverdickte Stirnende der Verriegelungshülse 26. Die Verdickung ist peripher auswärts gerichtet.

Zur Herbeiführung der Verriegelungsstellung braucht die zugeführte Kupplungshälfte II bloß die geringe Kraft der Druckfedern 33 zu überwinden und nicht die der Ventil-Druckfedern 15 und 25; das geschieht, wie gesagt, über den hilfsmediengesteuerten Schieber 9.

In Grundstellung nimmt das dortige federbeaufschlagte Stirnende 35 einen axialen Abstand y zur korrespondierenden Ringschulter des Gehäuses 8 ein. Dieser Abstand y entspricht dem Freigabehub für die Sperrkugeln 27.

Die ebenfalls sensor-registrierte, druckmittelbeaufschlagte Verlagerung der Verriegelungshülse 26 geschieht mittels mehrerer, gegen ihre dortige, andere Stirnkante 36 wirkende Einzelkolben 37. Letztere erstrecken sich in raumparallel zur Längsmittelachse x-x der Schnellverschlußkupplung K ausgerichteten Zylinderkammern 38 des Gehäuses 8. Die einzelnen Zylinderkammern 38 erhalten ihre Druckmitteleinspeisung an der mit A5 bezeichneten Anschlußstellen. Auch diese Anschlußstellen der in gleicher Winkelverteilung angeordneten Einzelkolben 37 stehen in Verbindung mit der erwähnten gemeinsamen Druckmittelquelle, und zwar über zwischengeschaltete, programmgesteuerte Ventile. Der im Rücken der Einzelkolben 37 einmündende Querkanal befindet sich in einem dem Gehäuse 8 zugeordneten Einsatzring 39.

Um die Einzelkolben 37 in ihrer Ausfahrstellung gegen Austritt zu sichern, liegt ein Teilabschnitt ihrer Stirnfläche im Bereich einer rotationssymmetrischen Sperrschulter 40 des Gehäuses 8. In Grundstellung der Kupplung liegt besagte Sperrschulter 40 in einem axialen Abstand zur Stirnfläche der Einzelkolben 37, der dem Abstand x entspricht.

Der als Schnellverschlußkupplung K ausgebildeten Kupplung ist ein ebenfalls sensor-bedingt druckmittelbeaufschlagter Auswerferstößel 41, ebenfalls axial verlagerbar sowie anschlagbegrenzt, zugeordnet. Die entsprechende Ausfahrverlagerung des Auswerferstößels 41 führt zu einem praktisch schlagartigen Trennen der beiden Kupplungshälften I, II voneinander. Diesem Trennen geht das, wie schon angedeutet, ebenfalls sensor-bedingte Schließen der Verschlußventile V1, V2 sowie das Entriegeln voraus.

Zweckmäßig handelt es sich bei dem Auswerferstößel 41 um einen zweiseitig druckmittelbeaufschlagbaren Ringkolben. Der eigentliche Kolben 42 sitzt an dem dem Anschlußstutzen 2 zugewandten Ende dieses Ringkörpers. Er liegt innenseitig und wirkt gehäuseseitig in einer Zylinderkammer 43 des Gehäuses 8. Die eine, das Ausfahren des Auswerferstößels 41 veranlassende Anschlußstelle befindet sich im Bereich des Bodens des Gehäuses 8 und ist mit A3 bezeichnet. Sie steht ebenso wie die im Bereich des dem Anschlußstutzen 2 abgewandten Endes liegende Anschlußstelle A4 mit der erwähnten zentralen Druckmittelquelle in Verbindung, auch hier wiederum unter Zwischenschaltung der erforderlichen Steuerventile eines Programmes.

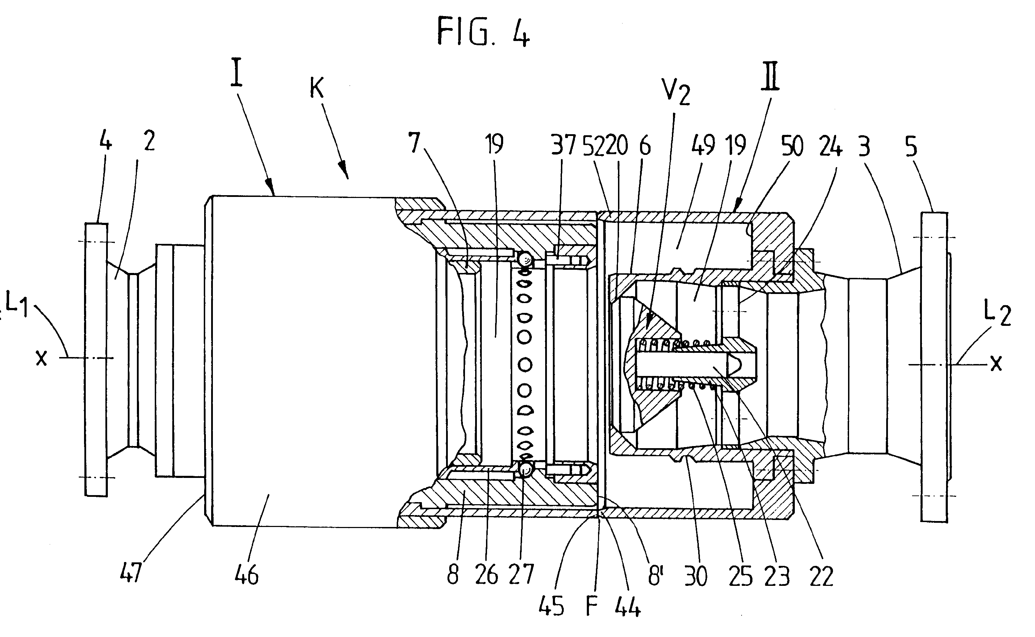

Weiter ist baulich so vorgegangen, daß der in der einen Kupplungshälfte I sitzende Ringkolben des Auswerferstößels 41 sich unmittelbar vor einer etwa auf Höhe der außen sichtbaren Trennfuge F der beiden Kupplungshälften I, II liegenden Ringschulter 44 der anderen Kupplungshälfte II erstreckt. Das stoßaktive Stirnende des Auswerferstößels 41 heißt 45. Die axiale Länge desAuswerferstößels 41 ist so bemessen, daß dessen Stirnende 45 in voll ausgefahrener Endstellung des Auswerferstößels 41 mit dem freien Ende 8′ der einen Kupplungshälfte I fluchtet (vergl. Fig. 4). Die Kupplungshälfte II kann sich so unter Verlassen der gemeinsamen Längsmittelachse x-x sogar quer ablösen.

Den peripheren Abschluß der Zylinderkammer 43 und eigentlich auch des ganzen, den Ringkolben 41 aufnehmenden Ringschachtes der einen Kupplungshälfte I bringt eine das Gehäuse 8 konzentrisch umgebende Ringwandung 46, welche fugenabgewandt über einen einwärts gerichteten Bodenabschnitt 47 mittels Befestigungsschrauben 48 am Gehäuse 8 angeflanscht ist.

Der sich über die Ringwandung 46 fugenseitig fortsetzende, abgesetzte Abschnitt des Gehäuses 8 besitzt eine in einem Topfring der anderen Kupplungshälfte II axial voll unterbringbare Länge. Der entsprechende Ringraum dieser Kupplungshälfte trägt das Bezugszeichen 49. Sein Topfboden 50 bildet die Erregergegenfläche für einen im Stirnende 45 des Gehäuses 8 liegenden Näherungsinitiators 51 (vergl. Fig. 3), welcher Näherungsinitiator mit der Kennung N1 in Verbindung steht und zusätzlich zur erwähnten Kennung N2 vorgesehen ist, welche den z. B. Schließzustand der Verschlußventile V1, V2 meldet.

In der Schnittdarstellung Fig. 3 sind die Anschlußstellen A1 - A5 gut übersichtlich dargestellt, dies ebenso, wie die Kennungsstellen N1, N2.

Alle dichtungsbedürftigen Stellen tragen partiell in Nuten eingelassene O-Ringe.

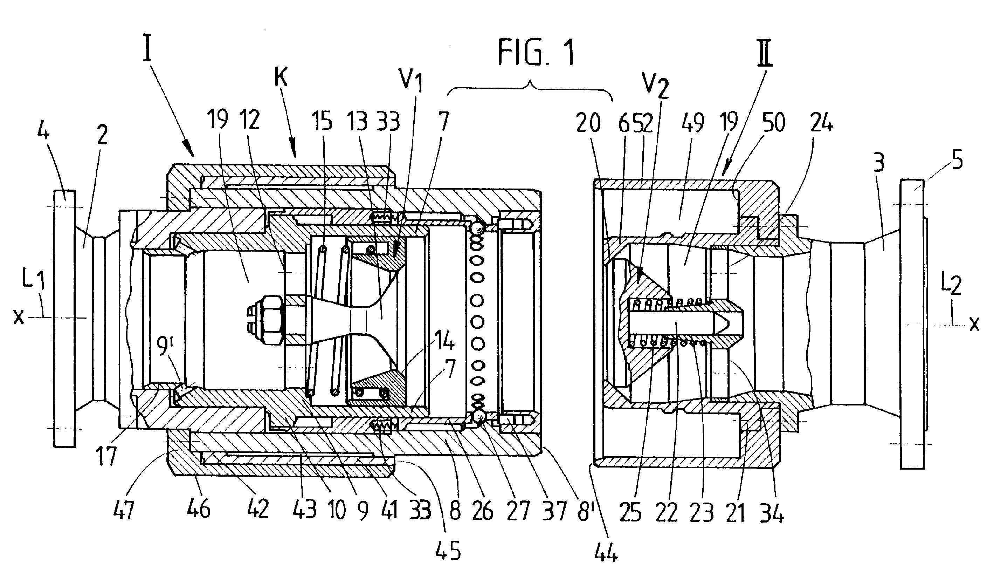

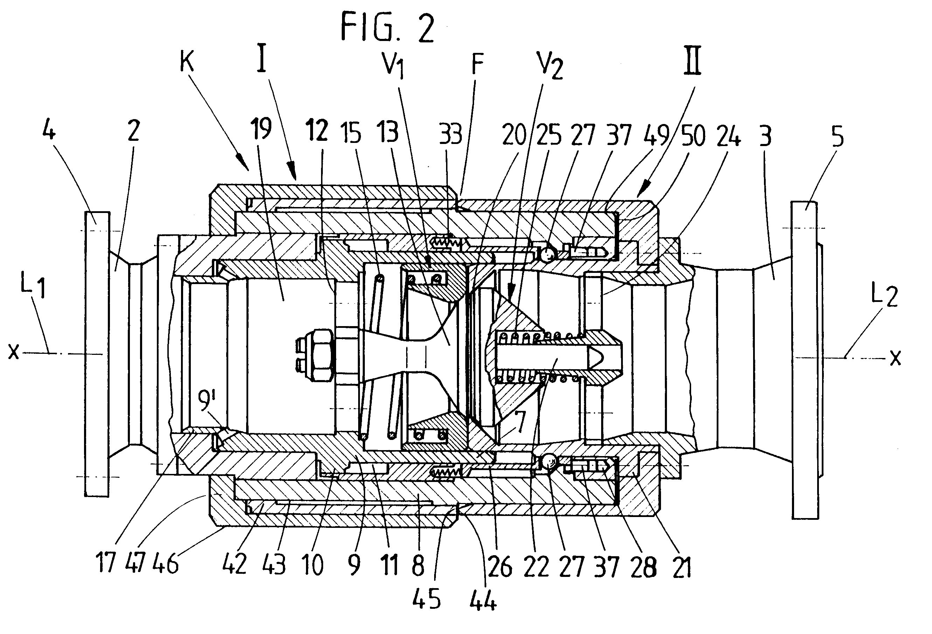

Die Funktion ist, kurz zusammengefaßt, wie folgt: Zum Kuppeln der Schnellverschlußkupplung K unter Berücksichtigung der Ausgangsposition gemäß Fig. 1, in welcher beide Verschlußventile V1, V2 geschlossen sind, wird die Kupplungsposition gemäß Fig. 2 herbeigeführt, und zwar durch koaxiales Nähern und Einführen des Nippels 6 (schiffsseitig montiertes Festteil, sogenannter Clean-break-Verschlußnippel) in das Losteil (Clean-break-Verschlußkupplung), welches als Abschluß des Verladerarms am Schiffslader angeordnet ist. Das geschieht entgegen der relativ geringen Kraft der Verriegelungshülsen-Druckfedern 33. Es wurden zuvor die entsprechenden Steuerventile der Anschlußstellen A1/A4 mit Steuerdruck beaufschlagt. Die Verschlußkupplung K befand sich in Kuppelbereitschaft. Die Kupplungshälften I.II können zusammengefahren werden. Das kann manuell oder durch den Schiffslader erfolgen. Dies geschieht, bis die Verriegelung einrastet und die Kennung N1 erfolgt. In dieser Stellung kann die Kuppeleinheit beliebig lange verharren.

Es erfolgt nun das Umsteuern des Steuerdrucks von A1 auf A2. Die in der Kupplungshälfte I und dem Verschlußnippel 6 befindlichen Verschlußventile V1, V2 werden geöffnet. Die Kennung N2 meldet diese Betankungsposition "Beide Verschlußventile geöffnet". Zum ordnungsgemäßen Entkuppeln wird der Steuerdruck von A2 wieder auf A1 umgeschaltet. Die beiden Verschlußventile V1, V2 der Kupplungshälften I, II werden geschlossen.

Nun wird die Anschlußstelle A5 mit Steuerdruck belegt. Die Verriegelung wird entriegelt. Diese Trennung kann wieder manuell oder über die Auswerferfunktion geschehen. Hierzu wird Steuerdruck von der Anschlußstelle A4 auf die Anschlußstelle A3 umgeschaltet.

Außer dieser Normalfunktion läßt sich in der Wirkung des sogenannten Driftsicherungssystems über das Ausfahren des Auswerferstößels 41 schlagartig das Trennen der Kupplungshälften, also Auswerfen der Kupplungshälfte II, bewirken, was aber erst in zwingender Abhängigkeit der in der Beschreibung erläuterten Abfolge der Funktionen möglich ist, d. h. jeweils stets Schließen der Verschlußventile V1, V2 unter Verfahren des Ringschiebers 9 aus dem Sperrbereich der Verriegelungshülse 26. Erst wenn die Verriegelungskugeln 27 den Nippel 6, d. h. dessen Ringnut 30 verlassen haben, kann der Auswerferstößel 41 über die Ringwand 52 die schiffsseitige Kupplungshälfte II abstemmen.

Leckverluste sind praktisch ausgeschlossen.

## Patentansprüche

1. In Betankungsleitung (L1,L2) oder dergleichen einsetzbare Kupplung mit den Strömungsweg des Mediums absperrenden Verschlußmitteln, welche selbsttätig in Abhängigkeit von einer Verlagerung der Zuleitung zur Ableitung in die Verschlußstellung gesteuert sind, wobei die Kupplung als Schnellverschluß-Kupplung (K) gestaltet ist, dadurch gekennzeichnet, daß die genannte Verlagerung sensor-registriert ist und daß die Kupplung mit einem sensor-bedingt druckmittelbeaufschlagten Auswerferstößel (41) zum Trennen der beiden zuvor ebenfalls sensor-bedingt je für sich in Schließstellung gesteuerten Kupplungshälften (I,II) versehen ist.

2. Kupplung nach Anspruch 1, dadurch gekennzeichnet, daß der Auswerferstößel (41) als zweiseitig druckmittelbeaufschlagbarer Ringkolben gestaltet ist.

3. Kupplung nach Anspruch 2, dadurch gekennzeichnet, daß der in der einen Kupplungshälfte (I) sitzende Ringkolben (41) sich unmittelbar vor einer etwa auf Höhe der Trennfuge (F) der beiden Kupplungshälften (I,II) liegenden Ringschulter (44) der anderen Kupplungshälfte (II) erstreckt und in ausgefahrener Endstellung mit dem freien Stirnende (8′) der einen Kupplungshälfte (I) fluchtet.

4. Kupplung nach Anspruch 2 oder 3, dadurch gekennzeichnet, daß der Ringkolben (41) in einem Ringschacht der einen Kupplungshälfte (I) angeordnet ist.

5. Kupplung nach den Ansprüchen 2, 3 oder 4, dadurch gekennzeichnet, daß die Verschlußteile der Kupplungshälften (I,II) eine ihnen zugeordnete Verriegelungshülse (26) aufweisen und der Ringkolben (41) von einer gemeinsamen Druckmittelstelle gespeist ist.

6. Kupplung nach Anspruch 5, dadurch gekennzeichnet, daß die Verriegelungshülse (26) gegen Verlagerung in Öffnungsrichtung blockiert ist mittels der Stirnkante (32) eines die Verschlußventile (V1,V2) steuernden, beidseitig druckmittelbeaufschlagbaren Ringschiebers (9).

7. Kupplung nach Anspruch 5 oder 6, dadurch gekennzeichnet, daß die Verriegelungshülse (26) mittels mehrerer gegen ihre Stirnkante (36) wirkender Einzelkolben (37) entgegen Federwirkung in Öffnungsstellung verlagerbar ist.

## Claims

1. A coupling for installation in filling hoses (L1, L2) or the like with closure means for blocking the flow path of the medium which, in response to a displacement of the inlet to the outlet, are automatically moved into the closure position, wherein the coupling is in the form of a quick action coupling (K), **characterised** in that the said displacement is sensor-registered and that the coupling is provided with a sensor-conditional ejection plunger (41), which is acted upon by a pressure medium, for separating the two coupling halves (I, II), which have previously themselves been moved sensor-conditionally into the closure position.

2. Coupling according to claim 1, **characterised** in that the ejection plunger (41) is in the form of a double-sided annular piston subjected on both sides to pressure medium.

3. Coupling according to claim 2, **characterised** in that the annular piston (41) seated in the coupling halve (I) extends directly in front of the annular shoulder (44) of the other coupling half (I, II) situated approximately level with the separating gap (F) between the two coupling halves and in the extended end position aligns with the free end face ( 8′) of the coupling half (I).

4. Coupling according to claim 2 or 3, **characterised** in that the annular piston (41) is arranged in an annular shaft of the coupling half (I).

5. Coupling according to the claims 2, 3 or 4, **characterised** in that the closure parts of the coupling halves (I, II) have a locking sleeve (26) associated therewith and the annular piston (41) is supplied from a common source of pressure medium.

6. Coupling according to claim 5, **characterised** in that the locking sleeve (26) is blocked against displacement in the opening direction by means of the front edge (32) of an annular slide (9), which is subjected to pressure medium on both sides, for controlling the closure valves (V1, V2).

7. Coupling according to claim 5 or 6, **characterised** in that the locking sleeve (26) can be displaced against the action of a spring in the opening position by means of a plurality of individual pistons (37) acting on the front edge (36) of the locking sleeve (26).

## Revendications

1. Raccord destiné à une conduite de ravitaillement (L1, L2) ou analogue, avec des moyens d'obturation obturant le trajet d'écoulement du fluide et commandé automatiquement, pour passer en position d'obturation, en fonction d'un déplacement de la conduite d'amenée par rapport à la conduite d'évacuation, le raccord étant configuré sous forme de raccord à fermeture rapide (K), caractérisé en ce que le déplacement détecté est appréhendé par capteurs et en ce que le raccord est pourvu d'un poussoir éjecteur (41), sollicité, sous l'influence des capteurs, par le fluide sous pression, en vue de séparer les deux demi-raccords (I, II), commandés individuellement, de façon à passer en position de fermeture, et également placés fonctionnellement sous l'influence des capteurs.

2. Raccord selon la revendication 1, caractérisé en ce que le poussoir éjecteur (41) est réalisé sous forme de piston annulaire pouvant être sollicité de part et d'autre par le fluide sous pression.

3. Raccord selon la revendication 2, caractérisé en ce que le piston annulaire (41) placé dans un demi-raccord (I) s'étend directement devant un épaulement annulaire (44), situé à peu près au niveau du joint de séparation (F) des deux demi-raccords (I, II), de l'autre demi-raccord (II) et, en position finale déployée, est aligné par rapport à l'extrémité frontale libre (8′) du premier demi-raccord (I).

4. Raccord selon la revendication 2 ou 3, caractérisé en ce que le piston annulaire (41) est disposé dans un puits annulaire du premier demi-raccord (I).

5. Raccord selon les revendications 2, 3 ou 4, caractérisé en ce que les parties d'obturation des demi-raccords (I, II) présentent une douille de verrouillage (26) leur étant associée, et le piston annulaire (41) étant alimenté depuis une source de fluide sous pression commune.

6. Raccord selon la revendication 5, caractérisé en ce que la douille de verrouillage (26) est bloquée de façon à empêcher tout déplacement dans la direction de l'ouverture, au moyen de l'arête frontale (32) d'un curseur annulaire (9), commandant les soupapes d'obturation (V1, V2) et pouvant être exposées de part et d'autre par le fluide sous pression.

7. Raccord selon la revendication 5 ou 6, caractérisé en ce que la douille de verrouillage (26) est déplaçable en position d'ouverture, à l'encontre de l'effet d'un ressort, au moyen de plusieurs pistons individuels (37) agissant contre ces arêtes frontales (36).
